# EUROPÄISCHE PATENTSCHRIFT

(11) **EP 1 788 748 B1**
(45) Veröffentlichungstag und Bekanntmachung des Hinweises auf die Patenterteilung: **11.02.2009**
(21) Anmeldenummer: 05025230.3
(22) Anmeldetag: 18.11.2005
(51) Int. Cl.: H04L 12/28, H04W 88/08

(54) **Verfahren zum Betrieb einer Vorrichtung in einem Funkzugangsnetz eines Funkkommunikationssystems sowie Funkzugangsnetz und Vorrichtung**
Method of operating a device in a radio access network of a radio communication system as well as radio access network and device
Procédé d'utilisation d'un dispositif dans un réseau d'accès radio d'un système de communication radio et réseau d'accès radio et dispositif

(43) Veröffentlichungstag der Anmeldung: 23.05.2007
(73) Patentinhaber: Nokia Siemens Networks GmbH & Co. KG, 81541 München (DE)
(72) Erfinder: Brenner, Jörg, 22303 Hamburg (DE); Dembski-Minssen, Ricklef, 27419 Sittensen (DE); Schwenke, Dirk, 21129 Hamburg (DE); Wolff, Florian, 22459 Hamburg (DE); Von der Heide, Stefan, 22846 Norderstedt (DE)

(56) Entgegenhaltungen:
- EP-A- 1 220 513
- DE-A1- 10 219 154
- US-A- 5 566 225
- US-B1- 6 701 449

## Beschreibung

Die Erfindung betrifft ein Verfahren zum Betrieb einer Vorrichtung in einem Funkzugangsnetz eines Funkkommunikationssystems sowie ein entsprechendes Funkzugangsnetz und eine entsprechende Vorrichtung.

In Funkzugangsnetzen beispielsweise gemäß dem GSM-Standard (GSM: Global System for Mobile Communications) werden zwischen miteinander verbundenen Netzelementen Kontrollsignale, so genannte Herzschläge (engl.: heartbeats), übertragen, durch die Verbindungsunterbrechungen erkannt werden können.

Verbindungsunterbrechungen entstehen beispielsweise, wenn auf einer Verbindung zwischen zwei Netzelementen übertragene Signale so stark gedämpft werden, dass das jeweils für den Empfang vorgesehene Netzelement die zu empfangenden Signale nicht mehr detektieren kann. Eine Verbindung zwischen Netzelementen erfolgt beispielsweise leitungsgebunden oder über eine Luftschnittstelle. Bei Verbindungen über eine Luftschnittstelle kommt es beispielsweise zu unvorhersehbaren Verbindungsunterbrechungen, da der Signalübertragungsweg zufälligen Schwankungen unterliegt, die in der Natur der Luftschnittstelle begründet sind - beispielhaft seien atmosphärische Störungen oder Signaleinstreuungen aus benachbarten Frequenzbändern genannt. Des Weiteren können Verbindungsunterbrechungen durch einen Ausfall eines Netzelementes entstehen.

Empfängt beispielsweise eine Funkstation von einer Funksteuerung oder eine Funksteuerung von einer Funkstation ein entsprechendes Kontrollsignal (heartbeat), wird als Antwort ein Bestätigungssignal gesendet, anhand dessen die das Kontrollsignal empfangende Station erkennt, dass das Kontrollsignal empfangen wurde und die Verbindung somit zur Zeit besteht. Detektiert ein Netzelement eines Funkzugangsnetzes, beispielsweise eine Funkstation oder eine Funksteuerung, einen Verbindungsunterbrechung, d.h. auf eine gesendetes Kontrollsignal wird kein Bestätigungssignal empfangen, werden alle bestehenden Datenverbindungen abgebrochen und müssen zu ihrer Fortsetzung neu aufgebaut werden.

Derartige Kontrollsignale zur Überprüfung einer Verbindung werden zwischen Netzelementen von Funkzugangsnetzen mit einer vorgegebenen Wiederholrate ausgetauscht. Verbindungsunterbrechungen, die zwischen zwei jeweils zur Detektion von Bestätigungssignalen vorgesehenen Zeitpunkten beginnen und auch enden, können nicht detektiert werden. Detektiert werden alle Verbindungsunterbrechungen, die länger andauern als der zeitliche Abstand zwischen zwei Detektionszeitpunkten, oder die erst nach dem Empfang eines ersten Kontrollsignals eintreten, aber bis zum von der vorgegebenen Wiederholrate abhängigen Empfangszeitpunkt eines zweiten Kontrollsignals andauern. Eine Detektion mit hoher vorgegebener Wiederholrate kann mit Nachteil dazu führen, dass auch Verbindungsunterbrechungen detektiert werden und somit zum Abbruch einer aktuellen Datenübertragung führen, deren Dauer so kurz ist, dass sie für eine zu diesem Zeitpunkt durchgeführte Übertragung von Daten unkritisch sind. Wird mit niedriger vorgegebener Wiederholrate detektiert, wird eine Verbindungsunterbrechung mit einer Dauer, die beispielsweise im Fall einer zeitkritischen Datenübertragung störend ist, möglicherweise nicht detektiert.

Aus der US 5,566,225 ist ein Verfahren in einem Funkkommunikationssystem bekannt, bei dem Agenten in einer Mobilstation und in einer Netzstation bei einer Verbindungsunterbrechung an beiden Enden der Funkverbindung eingehende sog. "keepalive" Datenpakete beantworten. Dadurch kann nach der Verbindungsunterbrechung und während einem nachfolgenden Wiederaufbau der Funkverbindung die Verbindung aufrecht erhalten werden.

Der Erfindung liegt die Aufgabe zugrunde, ein vorteilhaftes Verfahren sowie ein vorteilhaftes Funkzugangsnetz und eine vorteilhafte Vorrichtung zur Detektion von Verbindungsunterbrechungen in einem Funkzugangsnetz mit vorgegebener Wiederholrate für Kontrollsignale zur Detektion von Verbindungsunterbrechungen anzugeben, mittels derer die Dauer detektierbarer Verbindungsunterbrechungen verändert werden kann.

Diese Aufgabe wird mit dem Verfahren, dem Funkzugangsnetz und der Vorrichtung gemäß den unabhängigen Ansprüchen gelöst.

Vorteilhafte Ausgestaltungen und Weiterbildungen der Erfindung sind Gegenstand abhängiger Ansprüche.

Bei dem erfindungsgemäßen Verfahren zum Betrieb einer Vorrichtung in einem Funkzugangsnetz eines Funkkommunikationssystems ist die Vorrichtung zwischen einem ersten Netzelement und einem zweiten Netzelement des Funkzugangsnetzes angeordnet, empfängt zu einem ersten Zeitpunkt von dem ersten Netzelement ein erstes Kontrollsignal und sendet zu einem zweiten Zeitpunkt ein erstes Bestätigungssignal als Antwort auf das erste Kontrollsignal an das erste Netzelement, wobei das erste Bestätigungssignal dem ersten Netzelement signalisiert, dass eine Verbindung zwischen dem ersten Netzelement und dem zweiten Netzelement besteht. Zu einem dritten Zeitpunkt sendet die Vorrichtung ein zweites Kontrollsignal an das zweite Netzelement, wobei das zweite Netzelement bei Empfang des zweiten Kontrollsignals als Antwort ein zweites Bestätigungssignal an die Vorrichtung sendet, um der Vorrichtung das Bestehen einer Verbindung zwischen der Vorrichtung und dem zweiten Netzelement zu signalisieren. Erfindungsgemäß sendet die Vorrichtung das erste Bestätigungssignal auch dann, wenn zwischen dem ersten Zeitpunkt und dem zweiten Zeitpunkt kein zweites Bestätigungssignal empfangen wurde.

In dem Funkkommunikationssystem ist beispielsweise vorgesehen, dass zwischen Netzelementen zur Überprüfung des Bestehens einer Verbindung das erste Kontrollsignal übertragen und als Antwort das erste Bestätigungssignal bei bestehender Verbindung gesendet wird. Durch die Erfindung wird nun ermöglicht, dass dem ersten Netzelement das Bestehen einer Verbindung auch dann signalisiert wird, wenn die Vorrichtung - und somit auch das erste Netzelement - keine Verbindung zum zweiten Netzelement hat bzw. nicht darüber informiert ist, ob sie eine Verbindung zum zweiten Netzelement hat, da sie kein zweites Bestätigungssignal empfangen hat. Die Vorrichtung kann somit derart betrieben werden, dass das erste Netzelement davon ausgeht, eine Verbindung zum zweiten Netzelement zu haben, obwohl zum Zeitpunkt des Empfangs des ersten Bestätigungssignals möglicherweise gar keine Verbindung zum zweiten Netzelement besteht. Die Vorrichtung ermöglicht also das Ignorieren einer Verbindungsunterbrechung zwischen erstem und zweitem Netzelement.

Vorteilhafterweise werden das erste und das zweite Kontrollsignal wiederholt empfangen und gesendet und jeweils unterschiedliche Wiederholraten verwendet.

Auf diese Weise kann das Funkkommunikationssystem derart betrieben werden, dass durch das Verwenden einer ersten Wiederholrate für das erste Kontrollsignal Verbindungsunterbrechungen mit einer ersten Dauer, die größer oder gleich dem Kehrwert der ersten Wiederholrate ist, immer detektiert werden können, wenn zwischen Netzelementen keine erfindungsgemäße Vorrichtung verwendet wird. Durch das Verwenden der Vorrichtung mit einer zweiten Wiederholrate für das zweite Kontrollsignal kann erreicht werden, dass Verbindungsunterbrechungen nicht detektiert werden, die ohne das zweite Kontrollsignal detektiert worden wären. Dies kann beispielsweise erreicht werden, indem die zweite Wiederholrate kleiner ist als die erste Wiederholrate. Verbindungsunterbrechungen mit einer jeweiligen Dauer, die größer oder gleich dem Kehrwert der ersten Wiederholrate, aber kleiner als der Kehrwert der zweiten Wiederholrate ist, werden in diesem Fall nicht detektiert, wenn sie zwischen zwei durch die zweite Wiederholrate vorgegebenen Empfangszeitpunkten des zweiten Kontrollsignals erfolgen. Durch die Erfindung kann somit erreicht werden, dass Verbindungsunterbrechungen zwischen dem ersten und dem zweiten Netzelement mit einer Dauer nicht detektiert und somit nicht beachtet werden, die beim ausschließlichen Verwenden der ersten Wiederholrate unter Verzicht des Verwendens der Vorrichtung in jedem Fall detektiert worden wären und somit beispielsweise zu einem Verbindungsabbruch für eine beispielsweise an das erste Netzelement angeschlossene Teilnehmerstation geführt hätten.

Vorteilhafter Weise hängt die Wiederholrate für das zweite Kontrollsignal von der Art der Verbindung zwischen der Vorrichtung und dem zweiten Netzelement ab.

Unter der Art der Verbindung soll sowohl die Art der übertragenen Daten, z.B. Echtzeit-Daten oder Nicht-Echtzeitdaten, als auch die physikalische Art der Verbindung, z.B. Satellitenverbindung, elektrische Verbindung, Verbindung mittels optischer Frequenzen, verstanden werden.

Die Wiederholrate des zweiten Kontrollsignals kann mit Vorteil so gewählt werden, dass bei zeitkritischen Verbindungen eine hohe Wiederholrate gewählt wird, mit der auch sehr kleine Verbindungsunterbrechungen sicher detektiert werden können. Bei zeitunkritischen Verbindungen, z.B. Datenübertragungen zum Software-Download, oder bei einem System-Leerlauf, z.B. keine Gespräche, deren Daten zwischen dem ersten und zweiten Netzelement weitergeleitet werden müssen, kann eine geringe Wiederholrate für das zweite Kontrollsignal gewählt werden, so dass zwischen zwei Sendezeitpunkten des zweiten Kontrollsignals die Verbindung zwischen der Vorrichtung und dem zweiten Netzelement sogar absichtlich unterbrochen werden kann. Letzteres ist beispielsweise bei kostenintensiven Satellitenverbindungen von Vorteil, um Kosten zu sparen. Es ist somit von Vorteil, wenn die Wiederholrate des zweiten Kontrollsignals so eingestellt wird, dass ihr Kehrwert kleiner ist als die kürzeste Dauer einer Verbindungsunterbrechung, die mit Sicherheit detektiert werden soll.

In einer Weiterbildung der Erfindung ist vorgesehen, dass zwischen dem ersten Netzelement und dem zweiten Netzelement Daten einer Funkverbindung einer Teilnehmerstation des Funkkommunikationssystems übertragen werden. Weiterhin stellt die Vorrichtung eine Unterbrechung ihrer Verbindung zum zweiten Netzelement fest und übernimmt für die Dauer der Unterbrechung gegenüber dem ersten Netzelement ein Austausch und/oder eine Verarbeitung von Daten, die zur Aufrechterhaltung der Funkverbindung benötigt werden.

Auf diese Weise wird erreicht, dass selbst dann, wenn eine Verbindungsunterbrechung festgestellt wird, weil die Vorrichtung beispielsweise kein zweites Bestätigungssignal als Antwort auf das von ihr gesendete zweite Kontrollsignal empfängt, dennoch eine Verbindungsunterbrechung zur Teilnehmerstation des Funkkommunikationssystems vermieden wird.

Eine weitere Ausgestaltung der Erfindung sieht vor, dass die Vorrichtung über das erste Netzelement Daten zum Einrichten einer Datenübertragung zu einer über das zweite Netzelement erreichbaren Teilnehmerstation des Funkkommunikationssystems empfängt. Nachdem die Vorrichtung eine Unterbrechung ihrer Verbindung zum zweiten Netzelement feststellt, speichert sie die für das Einrichten der Datenübertragung empfangenen Daten und richtet die Datenübertragung anhand der gespeicherten Daten ein, sobald eine Verbindung zum zweiten Netzelement besteht.

Auf diese Weise wird vermieden, dass das Einrichten einer Datenübertragung, d.h. der Aufbau einer Verbindung, erneut signalisiert werden muss, nachdem bei einem Versuch die Datenübertragung einzurichten festgestellt wurde, dass eine Unterbrechung einer Verbindung zwischen dem ersten und dem zweiten Netzelement besteht.

Vorteilhafterweise sendet die Vorrichtung der Teilnehmerstation und/oder einer Station, die eine Datenübertragung einzurichten wünscht, eine Information hinsichtlich der Unterbrechung der Verbindung.

Eine entsprechende Information ist beispielsweise eine Ansage aus einem Sprachspeichersystem, die mitteilt, dass nach Beenden der Unterbrechung der Verbindung die Funkverbindung und somit das Übertragen der Daten fortgesetzt wird bzw. dass die von der Station gewünschte Datenübertragung beispielsweise automatisch eingerichtet wird. Auf diese Weise kann erreicht werden, dass ein Teilnehmer, der die Teilnehmerstation oder die Station bedient, von sich aus die Funkverbindung abbricht oder auf das Einrichten der Datenübertragung verzichtet, weil die Verbindung unterbrochen war.

Eine Weiterbildung der Erfindung sieht vor, dass das erste Netzelement eine Funksteuerung und das zweite Netzelement eine Funkstation ist.

Eine alternative Weiterbildung sieht vor, dass das erste Netzelement eine Funkstation und das zweite Netzelement eine Funksteuerung ist.

Eine weitere Ausgestaltung der Erfindung sieht vor, dass eine weitere Vorrichtung zwischen der Vorrichtung und dem zweiten Netzelement angeordnet ist und statt des zweiten Netzelementes bei Empfang des zweiten Kontrollsignals als Antwort das zweite Bestätigungssignal an die Vorrichtung sendet.

Durch das Verwenden zweier Vorrichtungen, zwischen denen statt des ersten Kontrollsignals und des ersten Bestätigungssignals das zweite Kontrollsignal und das zweite Bestätigungssignal ausgetauscht werden, wird ermöglicht, die Erfindung derart in einem Funkzugangsnetz einzusetzen, dass sowohl erste Netzelemente als auch zweite Netzelemente, die bereits in einem Funkzugangsnetzes ohne die Erfindung betrieben werden, nicht verändert werden müssen, um die Erfindung in dem Funkzugangsnetz einsetzen zu können. Vorteilhafterweise ist die weitere Vorrichtung dazu ausgebildet, dem zweiten Netzelement als Antwort auf ein von dem zweiten Netzelement empfangenen dritten Kontrollsignal ein drittes Bestätigungssignal zu senden. Das dritte Bestätigungssignal signalisiert dem zweiten Netzelement, dass eine Verbindung zum ersten Netzelement besteht. Die weitere Vorrichtung ist weiterhin dazu ausgebildet, das dritte Bestätigungssignal zumindest zeitweise auch dann zu senden, wenn keine Verbindung zur Vorrichtung und somit zum ersten Netzelement besteht, oder wenn der weiteren Vorrichtung keine entsprechende Information über den Zustand der Verbindung - z.B. durch ein als Antwort auf ein an die Vorrichtung gesendetes zweites Kontrollsignal von der Vorrichtung empfangenes zweites Bestätigungssignal - vorliegt.

Sowohl das erste Netzelement als auch das zweite Netzelement erhalten somit von der Vorrichtung bzw. der weiteren Vorrichtung eine Information, dass eine Verbindung zwischen dem ersten und zweiten Netzelement besteht, auch dann, wenn die Vorrichtung und/oder die weitere Vorrichtung jeweils kein zweites Bestätigungssignal empfangen haben, das ihnen signalisiert, dass zwischen der Vorrichtung und der weiteren Vorrichtung eine Verbindung besteht. Auch bei einer Unterbrechung der Verbindung zwischen Vorrichtung und weiterer Vorrichtung wird durch die Erfindung ermöglicht, dem ersten und zweiten Netzelement dennoch zu signalisieren, dass eine Verbindung zwischen erstem und zweitem Netzelement besteht.

Vorteilhafter Weise sendet die weitere Vorrichtung oder das zweite Netzelement einer Station, mit der die Teilnehmerstation Daten austauscht, eine Information hinsichtlich der Unterbrechung der Verbindung.

Es ist insbesondere von Vorteil, wenn ein Übertragen von Kontrollsignalen zwischen der Vorrichtung und dem zweiten Netzelement oder zwischen der Vorrichtung und der weiteren Vorrichtung über eine Luftschnittstelle erfolgt.

Insbesondere in Funkzugangsnetzen, in denen zwischen Netzelementen Funkverbindungen zur Datenübertragung verwendet werden, kann es von Vorteil sein, wenn Verbindungsunterbrechungen, die bei einem Verwenden des ersten Kontrollsignals und des ersten Bestätigungssignals detektiert würden, durch das Verwenden der Vorrichtung und/oder der weiteren Vorrichtung nicht detektiert werden.

Beispielsweise wird eine Funkverbindung zwischen einer Funkstation, die sich in einem Flugzeug befindet, und einer zugehörigen Funksteuerung, die sich am Erdboden befindet, von einem Satellitensystem realisiert. Hier kann es zu kurzen Verbindungsunterbrechungen kommen, die jedoch für eine im Moment der Verbindungsunterbrechung durchgeführte Datenübertragung aufgrund der kurzen Dauer der Verbindungsunterbrechung nicht kritisch für das Durchführen der Datenübertragung sind. In einem herkömmlichen Funkzugangsnetz, das ausschließlich das erste Kontrollsignal und das erste Bestätigungssignals zur Detektion von Verbindungsunterbrechungen verwendet, kann es daher ohne die Erfindung zu unnötigen Verbindungsabbrüchen kommen, wenn mittels des ersten Kontrollsignals und des ersten Bestätigungssignals eine Verbindungsunterbrechung detektiert wird. Dies wird mit Vorteil durch das Verwenden der Vorrichtung und/oder der weiteren Vorrichtung vermieden.

Weiterhin sind beispielsweise Satellitenverbindungen teuer und können mit Vorteil zeitweise absichtlich unterbrochen werden, wenn beispielsweise keine Nutzdaten (z.B. Gesprächsdaten) zur Übertragung vorliegen, da das erste und zweite Netzelement weiterhin jeweils erste und dritte Bestätigungssignale empfangen. Auf diese Weise werden während der Verbindungsunterbrechung Kosten gespart. Beispielsweise eine über das erste und zweite Netzelement aufgebaute Gesprächsverbindung zwischen beispielsweise zwei Teilnehmerstationen wird aber durch die Erfindung nicht aufgrund der absichtlichen Verbindungsunterbrechung automatisch abgebrochen.

Darüber hinaus kann die Erfindung auch derart ausgeführt werden, dass das zweite Kontrollsignal bzw. das zweite Bestätigungssignal mit einer größeren Wiederholrate gesendet werden als das erste Kontrollsignal und das erste Bestätigungssignal. Auf diese Weise können bei sehr echtzeitkritischen Anwendungen, beispielsweise Echtzeitanwendungen, auch Verbindungsunterbrechungen detektiert werden, die kürzer sind als Verbindungsunterbrechungen, die mittels des ersten Kontrollsignals und des ersten Bestätigungssignals unter Verwendung einer einzigen starr festgelegten Wiederholrate detektierbar wären.

Durch die Erfindung wird eine große Variabilität für die Detektion von Verbindungsunterbrechungen erreicht. Weiterhin wird erreicht, dass Teilnehmer, die beispielsweise eine Teilnehmerstation bedienen und einem Verbindungsunterbrechung ausgesetzt sind, durch die zuvor erwähnte Information über die Verbindungsunterbrechung davon abgehalten werden können, ihrerseits ein Gespräch bzw. eine Datenübertragung zu beenden. Vielmehr werden sie durch die Information dazu angehalten abzuwarten, bis die Verbindungsunterbrechung beendet ist. Beispielsweise kann den Teilnehmern auch signalisiert werden, dass, während sie auf das Ende der Verbindungsunterbrechung warten, keine Gebühren berechnet werden. Zu diesem Zweck sendet die Vorrichtung und/oder die weitere Vorrichtung mit Vorteil ein entsprechendes Signal an ein Vergebührungszentrum des Funkkommunikationssystems.

Das erfindungsgemäße Funkzugangsnetz sowie die erfindungsgemäße Vorrichtung weisen jeweils alle Merkmale auf, die zur Durchführung des erfindungsgemäßen Verfahrens benötigt werden. Insbesondere können jeweils entsprechende Mittel zur Durchführung der einzelnen Verfahrensschritte oder Verfahrensvarianten vorgesehen sein.

Die Erfindung wird im Folgenden anhand von in den Figuren dargestellten Ausführungsbeispielen näher erläutert. Es zeigen:
- Fig. 1: eine erste schematische Darstellung eines erfindungsgemäßen Verfahrens zum Betrieb einer Vorrichtung,
- Fig. 2: eine zweite schematische Darstellung eines erfindungsgemäßen Verfahrens zum Betrieb einer Vorrichtung und einer weiteren Vorrichtung, und
- Fig. 3: eine dritte schematische Darstellung eines erfindungsgemäßen Verfahrens.

Gleiche Bezugszeichen in den Figuren bezeichnen gleiche Gegenstände.

Eine Teilnehmerstation ist beispielsweise ein Mobilfunkendgerät, insbesondere ein Mobiltelefon oder auch eine ortsbewegliche oder ortsfeste Vorrichtung zur Übertragung von Bild- und/oder Tondaten, zum Fax-, Short Message Service SMS-, Multimedia Messaging Service MMS- und/oder Email-Versand und/oder zum Internet-Zugang.

Ein Netzelement eines Funkzugangsnetzes eines Funkkommunikationssystems ist beispielsweise eine Funkstation oder eine Funksteuerung.

Eine Funkstation ist beispielsweise eine Basisstation, die von einer Teilnehmerstation Nutz- und/oder Signalisierungsdaten empfängt und/oder Nutz- und/oder Signalisierungsdaten an die Teilnehmerstation sendet. Eine Basisstation ist über netzseitige Einrichtungen mit einem Kernnetz verbunden, über das Verbindungen in andere Funkkommunikationssysteme oder in andere Datennetze erfolgen. Unter einem Datennetz ist beispielsweise das Internet oder ein Festnetz mit beispielsweise leitungsvermittelten oder paketvermittelten Verbindungen für z.B. Sprache und/oder Daten zu verstehen. Eine netzseitige Einrichtung ist beispielsweise eine Funksteuerung, die zum Steuern von Funkübertragungen zwischen der Basisstation und Teilnehmerstationen dient. Eine Verbindung zwischen der Basisstation und einer Funksteuerung kann sowohl über eine Luftschnittstelle, beispielsweise eine Satellitenverbindung, oder leitungsgebunden über eine beispielsweise elektrische oder optische Verbindung erfolgen.

Die Erfindung kann vorteilhaft in beliebigen Funkkommunikationssystemen verwendet werden. Unter Funkkommunikationssystemen sind Systeme zu verstehen, in denen eine Datenübertragung zwischen Funkstationen über eine Luftschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM-(Global System for Mobile Communications) oder dem UMTS-(Universal Mobile Telecommunications System) Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE (Institute of Electrical and Electronics Engineers) 802.11a-i, HiperLAN1 und HiperLAN2 (HiperLAN: high performance radio local area network) sowie Bluetooth-Netze und Breitbandnetze mit drahtlosem Zugang beispielsweise gemäß IEEE 802.16.

Im Folgenden wird die Erfindung am Beispiel eines Funkkommunikationssystems nach dem GSM-Standard beschrieben, ohne jedoch damit zum Ausdruck bringen zu wollen, dass die Erfindung hierauf beschränkt sein soll.

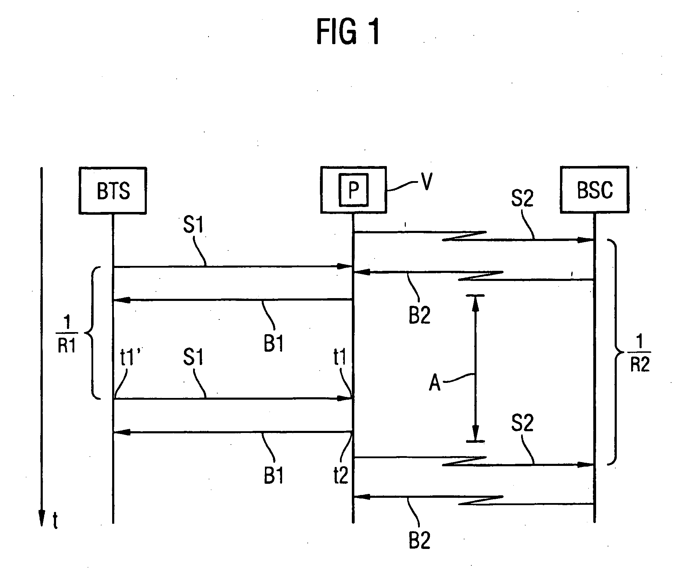

Figur 1 zeigt schematisch eine Basisstation BTS als erstes Netzelement, eine Vorrichtung V mit einem Prozessor P zum Steuern der Vorrichtung V und als zweites Netzelement eine Funksteuerung BSC, mittels derer Funkverbindungen zwischen Teilnehmerstationen und der Basisstation BTS gesteuert werden können. Die Basisstation BTS, die Vorrichtung V und die Funksteuerung BSC sind in einem Funkzugangsnetz eines Funkkommunikationssystems angeordnet.

Unabhängig davon, ob die Basisstation BTS eine Funkverbindung mit einer Teilnehmerstation unterhält, wird das Funkzugangsnetz des Funkkommunikationssystems derart betrieben, dass zum Überprüfen der Verbindung ein erstes Kontrollsignal von der Basisstation BTS an die Funksteuerung BSC mit einer ersten Wiederholrate R1 gesendet wird. Empfängt die Basisstation BTS als Antwort auf das erste Kontrollsignal S1 ein erstes Bestätigungssignal B1, so wird ihr dadurch signalisiert, dass die Verbindung zwischen der Basisstation BTS und der Funksteuerung BSC nicht unterbrochen ist.

Erfindungsgemäß ist die Vorrichtung V zwischen der Basisstation BTS und der Funksteuerung BSC angeordnet. Die Vorrichtung V fängt das für die Funksteuerung BSC bestimmte erste Kontrollsignal S1 ab und signalisiert der Basisstation BTS durch das Senden des ersten Bestätigungssignals B1, dass eine Verbindung zur Funksteuerung BSC besteht. Um selbst eine Information über das Bestehen einer Verbindung mit der Funksteuerung BSC zu erlangen, sendet die Vorrichtung V ein zweites Kontrollsignal S2 mit einer zweiten Wiederholrate R2 an die Funksteuerung BSC, die bei Empfang des zweiten Kontrollsignals S2 als Antwort ein zweites Bestätigungssignal B2 an die Vorrichtung V sendet und der Vorrichtung V damit signalisiert, dass eine Verbindung zur Funksteuerung BSC besteht.

Der zeitlich Abstand zwischen dem Empfang des ersten Kontrollsignals und/oder des zweiten Kontrollsignals bis zum Senden des ersten Bestätigungssignals und/oder des zweiten Bestätigungssignals ist für die Vorrichtung V und/oder die Funksteuerung BSC beispielsweise fest vorgegeben oder variabel einstellbar. Vorzugsweise erfolgt das Senden des ersten Bestätigungssignals und des zweiten Bestätigungssignals jeweils unmittelbar nach Empfang des ersten Kontrollsignals bzw. des zweiten Kontrollsignals.

Durch das Verwenden unterschiedlicher Wiederholraten R1, R2 für das erste Kontrollsignal S1 und das zweite Kontrollsignal S2 kommt es dazu, dass das erste Kontrollsignal S1 beispielsweise zu einem Zeitpunkt t1' von der Basisstation BTS gesendet und nachfolgend zu einem ersten Zeitpunkt t1 von der Vorrichtung V empfangen wird, der zwischen zwei Aussendungen des zweiten Kontrollsignals S2 durch die Vorrichtung V liegt. Zum ersten Zeitpunkt t1 des Empfangs des ersten Kontrollsignals S1 ist das auf das letzte Senden des zweiten Kontrollsignals S2 empfangene zweite Bestätigungssignal B2 bereits veraltet (Der letzte Empfang des zweiten Bestätigungssignals liegt beispielsweise mehr als 1/(2*R2) zurück.) und ein weiteres zweites Bestätigungssignals B2 liegt noch nicht vor. Die Vorrichtung kann daher keine zuverlässige Annahme darüber treffen, ob eine Verbindung zur Funksteuerung BSC besteht. Dennoch sendet die Vorrichtung V das erste Bestätigungssignal B1 zum zweiten Zeitpunkt t2 an die Basisstation BTS. Der Basisstation BTS wird somit signalisiert, dass eine Verbindung zwischen der Basisstation BTS und er Funksteuerung BSC besteht. Tatsächlich war während eines in Figur 1 mit A gekennzeichneten Zeitraumes die Verbindung zwischen der Vorrichtung V und der Funksteuerung BSC unterbrochen. Dieser Zeitraum lag jedoch zwischen den beiden dargestellten Aussendungen des zweiten Kontrollsignals S2 und wurde somit nicht detektiert.

Bei ausschließlicher Verwendung des ersten Kontrollsignals ohne die Vorrichtung V wäre das erste Kontrollsignal während der Verbindungsunterbrechung von der Basisstation BTS an die Funksteuerung BSC gesendet worden und die Basisstation BTS hätte nicht das erste Bestätigungssignal B1 zum zweiten Zeitpunkt erhalten. Es wäre somit zu einem Verbindungsabbruch für bestehende Datenübertragungen gekommen. Durch die Erfindung erhält die Basisstation BTS jedoch das erste Bestätigungssignal B1 und eine nicht dargestellte bestehende Datenübertragung kann trotz der Verbindungsunterbrechung fortgeführt werden, denn bereits zu einem dritten Zeitpunkt T3, zu dem zum das zweite Kontrollsignal S2 von der Vorrichtung V an die Funksteuerung BSC gesendet wird, besteht die Unterbrechung nicht mehr.

Die zweite Wiederholrate R2 ist in diesem Ausführungsbeispiel beispielsweise so gewählt, dass Verbindungsunterbrechungen, deren Dauer den zeitlichen Abstand zwischen zwei Aussendungen des zweiten Kontrollsignals S2, d.h. 1/R2, nicht übersteigt und die somit je nach ihrer relativen zeitlichen Lage in Bezug auf die gesendeten zweiten Kontrollsignale S2 möglicherweise nicht detektiert werden, für bestehende Datenübertragungen nicht störend sind.

Gemäß Figur 1 erfolgt das Senden der zweiten Kontrollsignale S2 und der zweiten Bestätigungssignale B2 zwischen der Vorrichtung V und der Funksteuerung BSC über eine Luftschnittstelle. Beispielsweise ist die Funkstation BTS in einem Flugzeug angeordnet, wobei die Vorrichtung V ebenfalls im Flugzeug angeordnet ist und entweder in der Funkstation BTS angeordnet oder unmittelbar mit ihr verbunden ist. Die Funksteuerung BSC ist beispielsweise am Erdboden angeordnet ist und eine Funkverbindung zwischen der Vorrichtung V und der Funksteuerung BSC erfolgt über eine Satellitenverbindung. In diesem Ausführungsbeispiel ist die zweite Wiederholrate R2 aufgrund der Satellitenverbindung geringer als die erste Wiederholrate R1. Auf diese Weise ist eine Wahrscheinlichkeit eines Verbindungsabbruchs aufgrund einer Verbindungsunterbrechung zwischen Vorrichtung V und Funksteuerung BSC geringer als dies der Fall wäre, wenn auch das zweite Kontrollsignal S2 mit der ersten Wiederholrate gesendet würde.

In diesem Ausführungsbeispiel ist die Funksteuerung BSC verglichen mit weiteren Funksteuerungen im Funkzugangsnetz des Funkkommunikationssystems, die nicht mit einer der Vorrichtung V entsprechenden Vorrichtung verbunden sind, derart angepasst worden, dass sie das zweite Kontrollsignal S2 bearbeiten und als Antwort das zweite Bestätigungssignal B2 senden kann. Das Funkzugangsnetz weist beispielsweise weitere Funksteuerungen und weitere Funkstationen auf, die beispielsweise beide am Erdboden angeordnet sind und zwischen denen beispielsweise leitungsgebunden das erste Kontrollsignal S1 und das erste Bestätigungssignal B1 direkt, d.h. ohne eine entsprechende Vorrichtung gesendet werden.

Zusätzlich zu der in Figur 1 dargestellten Übertragungsrichtung des ersten Kontrollsignals S1 sowie des zweiten Kontrollsignals S2 kann ebenfalls vorgesehen sein, dass die Vorrichtung V selbst das erste Kontrollsignal S1 an die Funkstation BTS sendet, um ihrerseits das erste Bestätigungssignal B1 von der Funkstation BTS zu empfangen. Weiterhin kann vorgesehen sein, dass die Funksteuerung BSC ihrerseits das zweite Kontrollsignal S2 an die Vorrichtung V sendet, um als Antwort das zweite Bestätigungssignal B2 zu erhalten. Auf diese Weise kann in analoger Weise wie zu Figur 1 beschrieben die jeweils umgekehrte Übertragungsrichtung hinsichtlich Verbindungsunterbrechungen überprüft werden. Dies ist insbesondere dann von Vorteil, wenn die Übertragungsrichtungen unterschiedliche Übertragungseigenschaften beispielsweise aufgrund unterschiedlicher Frequenzen und/oder aufgrund unterschiedlicher Übertragungswege aufweisen.

Aus Gründen der Übersichtlichkeit wurden Übertragungen in den eben genannten Übertragungsrichtungen in Figur 1 nicht dargestellt.

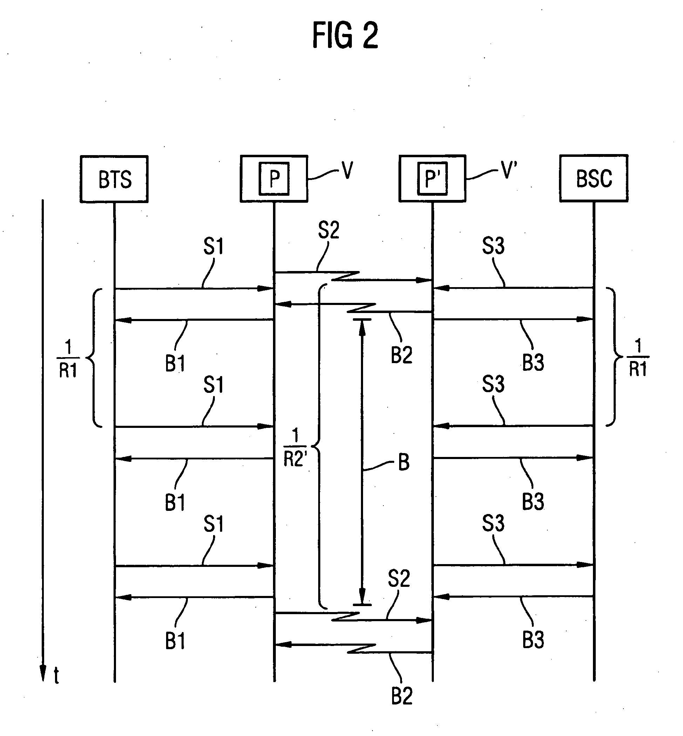

In Figur 2 ist schematisch ein dem zeitlichen Ablauf der Übertragung von ersten Kontrollsignalen S1 und zweiten Kontrollsignalen S2 sowie ersten Bestätigungssignalen B1 und zweiten Bestätigungssignalen B2 gemäß Figur 1 entsprechender Ablauf dargestellt.

Auch in diesem Ausführungsbeispiel tritt in einem mit B bezeichneten Zeitraum zwischen einem ersten Senden des zweiten Kontrollsignals S2 von der Vorrichtung V und einem zweiten Senden des zweiten Kontrollsignals S2 von der Vorrichtung V eine Verbindungsunterbrechung auf. Auch in diesem Fall wird der Funkstation BTS dennoch von der Vorrichtung V das Bestehen einer Verbindung zur Funksteuerung BSC signalisiert, in dem die Vorrichtung V zweimal während des Zeitraumes B auf ein empfangenes erstes Kontrollsignal S1 mit einem ersten Bestätigungssignal B1 antwortet.

In Abweichung zu dem Ausführungsbeispiel aus Figur 1 ist in diesem Ausführungsbeispiel zwischen der Vorrichtung V und der Funksteuerung BSC eine weitere Vorrichtung V' angeordnet, die mit einem weiteren Prozessor P' gesteuert wird. Die weitere Vorrichtung V' empfängt anstelle der Funksteuerung BSC zweite Kontrollsignale S2 von der Vorrichtung V und sendet bei Empfang als Antwort zur Bestätigung einer bestehenden Verbindung zwischen der Vorrichtung V und der weiteren Vorrichtung V' das zweite Bestätigungssignal B2.

Um zu überprüfen, ob eine Verbindung zwischen der Funkstation BTS und der Funksteuerung BSC besteht, sendet die Funksteuerung BSC beispielsweise mit der gleichen Wiederholrate, mit der die Funkstation BTS das erste Kontrollsignal S1 sendet, ein drittes Kontrollsignal S3 an die Funkstation BTS. Das dritte Kontrollsignal S3 wird von der weiteren Vorrichtung abgefangen und als Antwort erhält die Funksteuerung BSC ein drittes Bestätigungssignal B3, das der Funksteuerung BSC signalisiert, dass eine Verbindung mit der Funksteuerung BSC besteht. Auf diese Weise wird beispielsweise während des Zeitraums B auch der Funksteuerung BSC signalisiert, dass eine Verbindung mit der Funkstation BTS besteht. In gleicher Weise überprüft die weitere Vorrichtung V' die Verbindung zur Funksteuerung BSC mit dem dritten Kontrollsignal und erhält bei Empfang als Antwort das dritte Bestätigungssignal. Die Übertragungsrichtung ist aus Gründen der Übersichtlichkeit nicht dargestellt.

Das dritte Kontrollsignal wird beispielsweise ebenfalls mit der ersten Wiederholrate R1 und beispielsweise synchron mit dem ersten Kontrollsignal S1 gesendet. Selbstverständlich kann das dritte Kontrollsignal S3 auch mit einer anderen Wiederholrate und/oder asynchron gesendet werden.

Ebenso wie zu Figur 1 beschrieben, kann alternativ oder zusätzlich eine Übertragung der ersten und zweiten Kontrollsignale S1, S2 sowie der ersten und zweiten Bestätigungssignale B1, B2 in jeweils umgekehrter Richtung erfolgen. Diese Übertragungsrichtungen sind jedoch aus Gründen der Übersichtlichkeit in Figur 2 nicht dargestellt.

Das Verwenden der weiteren Vorrichtung V' ermöglicht es, die Erfindung auch in Funkkommunikationssystemen einzusetzen, in denen Funkstationen und Funksteuerungen verwendet werden, dies selbst nicht in der Lage sind, das erfindungsgemäße Verfahren zu unterstützen. Beispielsweise entspricht das dritte Kontrollsignal S3 dem ersten Kontrollsignal S1 und ist in dem Funkzugangsnetz vorgesehen, um zwischen netzseitigen Einrichtungen beispielsweise zwischen der Funkstation BTS und er Funksteuerung BSC gesendet zu werden, um ohne eine Vorrichtung V und eine weitere Vorrichtung V' Verbindungsunterbrechungen unter Verwenden der ersten Wiederholrate R1 zwischen der Funkstation BTS und der Funksteuerung BSC detektieren zu können.

Bevorzugt kommt das Ausführungsbeispiel gemäß Figur 2 in einem Funkzugangsnetz zum Einsatz, bei dem die Funkstation BTS in einem Flugzeug angeordnet ist, während sich die Funksteuerung BSC am Erdboden befindet. Die Vorrichtung V ist ebenfalls im Flugzeug angeordnet. Die weitere Vorrichtung V' ist mit der Vorrichtung V über eine Funkverbindung, beispielsweise eine Satellitenverbindung verbunden und befindet sich ebenso wie die Funksteuerung BSC am Erdboden.

In Figur 2 wird das zweite Kontrollsignal S2 zwischen der Vorrichtung V und der weiteren Vorrichtung V' beispielsweise mit einer weiteren Wiederholrate R2' gesendet, die größer ist als die zweite Wiederholrate R2 gemäß dem Ausführungsbeispiel aus Figur 1. Auf diese Weise werden noch größere Zeitdauern für Verbindungsunterbrechungen toleriert als dies gemäß Figur 1 mit der zweiten Wiederholrate R2 der Fall ist. Beispielsweise handelt es sich bei der in Figur 2 dargestellten Unterbrechung der Verbindung während des Zeitraumes B, um eine absichtliche Unterbrechung der Verbindung zwischen der Vorrichtung V und der weiteren Vorrichtung V', um beispielsweise Verbindungszeit auf einer teueren Satellitenverbindung zwischen der Vorrichtung V und der weiteren Vorrichtung V' einzusparen. Während des Zeitraums B wird die Satellitenverbindung beispielsweise wegen eines Nichtvorhandenseins zu übertragender Daten nicht benötigt. Dennoch wird sowohl der Funkstation BTS als auch der Funksteuerung BSC weiterhin das Bestehen einer Verbindung signalisiert, so dass bestehende Funkverbindungen von Teilnehmerstationen, die mit der Funkstation BTS verbunden sind, aber beispielsweise während der Zeitdauer B keine Daten zu übertragen haben, nicht unterbrochen werden, obwohl die Satellitenverbindung zwischen der Vorrichtung V und der weiteren Vorrichtung V' für den Zeitraum B unterbrochen wurde.

Diese Möglichkeit besteht nicht in Funkkommunikationssystemen mit Funkzugangsnetzen, bei denen das erste Kontrollsignal direkt zwischen der Funkstation BTS und der Funksteuerung BSC ausschließlich mit der ersten Wiederholrate gesendet wird. In diesem Fall wäre nämlich eine absichtliche oder unabsichtliche Unterbrechung der Verbindung zwischen der Funkstation BTS und der Funksteuerung BSC während des Zeitraumes B detektiert worden und hätte einen Abbruch aller Datenübertragungen, d.h. aller Funkverbindungen zwischen Teilnehmerstationen und der Funkstation BTS nach sich gezogen.

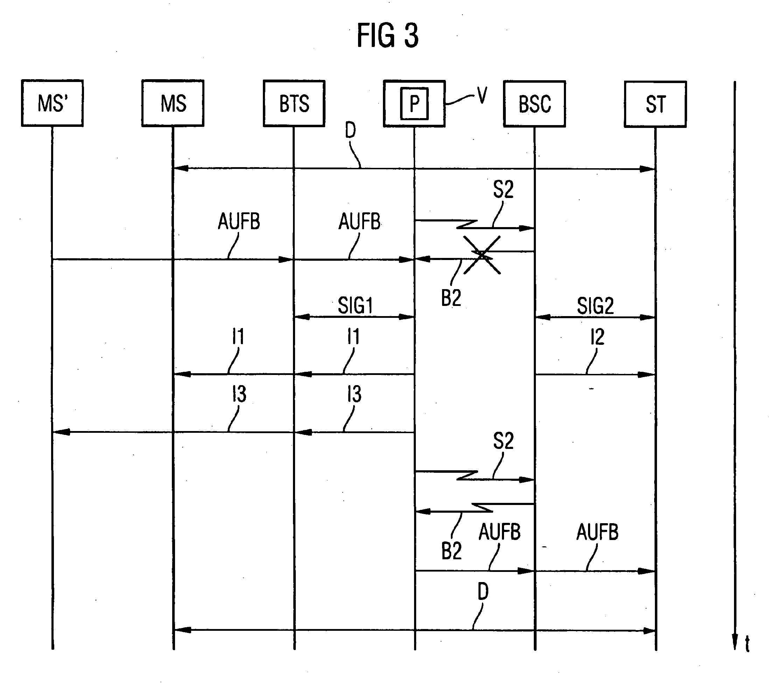

Eine Weiterbildung der Erfindung ist schematisch in Figur 3 dargestellt. Auch in dem Ausführungsbeispiel zu Figur 3 werden weiterhin erste Kontrollsignale S1 von der Funkstation BTS an die Vorrichtung V gesendet und zweite Kontrollsignale S2 von der Vorrichtung V an die Funksteuerung BSC, wie dies bereits anhand von Figur 1 beschrieben wurde. Aus Gründen der Übersichtlichkeit sind jedoch nur zweite Kontrollsignale S2 der Vorrichtung V dargestellt. Zu Beginn des Zeitstrahls in Figur 3 unterhält eine Teilnehmerstation MS eine Verbindung mit einer Station ST, wobei die Teilnehmerstation mit der Funkstation BTS über eine Funkverbindung verbunden ist, und die Station ST über weitere nicht dargestellte Einrichtungen mit der Funksteuerung BSC verbunden ist, um Daten D via der Vorrichtung V und der Funkstation BTS mit der Teilnehmerstation MS auszutauschen.

Die Vorrichtung V sendet das zweite Kontrollsignal S2 an die Funksteuerung BSC und erhält innerhalb eines dafür vorgesehenen Empfangszeitraums nicht das zweite Bestätigungssignal B2. Dies ist in Figur 3 durch das Durchstreichen mittels eines Kreuzes des Verbindungspfeils, der das zweite Bestätigungssignal B2 darstellt, zum Ausdruck gebracht. Die Vorrichtung V erkennt somit, dass die Verbindung zur Funksteuerung BSC unterbrochen ist. Gleichzeitig erhält die Vorrichtung von einer weiteren Teilnehmerstation MS' über die Funkstation BTS Signalisierungsdaten AUFB, mittels derer die weitere Teilnehmerstation MS' eine Datenübertragung einrichten, d.h. eine Verbindung zur Station ST aufbauen möchte. Die Vorrichtung V speichert diesen Verbindungsaufbauwunsch, d.h. die Signalisierungsdaten AUFB ab, um die Signalisierungsdaten AUFB zum automatischen Einrichten der Datenübertragung zu verwenden, wenn wieder eine Verbindung zur Funksteuerung BSC besteht.

Weiterhin tauscht die Vorrichtung V erste Signalisierungsdaten SIG1 mit der Funkstation BTS aus, die alle Informationen enthalten, die beispielsweise gemäß eines verwendeten Funkstandards benötigt werden, um die Funkverbindung zwischen der Teilnehmerstation MS und der Funkstation BTS aufrechtzuerhalten. Sowohl für die Funkstation BTS als auch die Teilnehmerstation MS scheint daher weiterhin eine Verbindung zur Station ST zu bestehen. Weiterhin erkennt auch die Funksteuerung BSC, beispielsweise, weil sie für ein von ihr an die Vorrichtung gesendetes zweites Kontrollsignal S2 kein zweites Bestätigungssignal B2 erhält, oder weil sie zu einem vorgegebenen Zeitpunkt kein zweites Kontrollsignal von der Vorrichtung V empfangen hat, dass die Verbindung zur Vorrichtung V unterbrochen ist. Die Funksteuerung BSC übernimmt daher den Austausch von zweiten Signalisierungsdaten SIG2 mit der Station ST, um der Station ST zu signalisieren, es bestünde noch eine Verbindung mit der Teilnehmerstation MS.

Weiterhin sendet die Vorrichtung V der Teilnehmerstation MS eine erste Information I1, und die Funksteuerung BSC sendet der Station ST eine zweite Information I2. Der ersten und zweiten Information I1, I2 ist jeweils entnehmbar, dass die Verbindung vorübergehend unterbrochen ist, aber eine Datenübertragung fortgesetzt werden kann, sobald wieder eine Verbindung besteht. Die Vorrichtung V sendet eine dritte Information 13 an die weitere Teilnehmerstation MS', der entnehmbar ist, dass die Verbindung vorübergehend unterbrochen ist, aber die gewünschte Datenübertragung automatisch eingerichtet wird, sobald wieder eine Verbindung besteht. Bei der ersten Information I1, der zweiten Information I2 und der dritten Information I3 handelt es sich beispielsweise jeweils um eine Ansage aus einem Sprachspeichersystem, die einen jeweiligen Teilnehmer, der die Teilnehmerstation MS, die weitere Teilnehmerstation MS' bzw. die Station ST bedient, die Verbindungsunterbrechung als Sprachnachricht mitteilt und auffordert, die Verbindung nicht manuell abzubrechen, da die Datenübertragung nach dem Wiederherstellen der Verbindung fortgesetzt bzw. die gewünschte Datenübertragung automatisch eingerichtet wird. Die erste, zweite und dritte Information I1, I2 dienen somit zur Information eines jeweiligen Teilnehmers der betroffenen Stationen, der manuell die Verbindung beenden oder das Einrichten einer Datenübertragung abbrechen kann, und greifen nicht in den Betrieb der Stationen ein. Hingegen werden die ersten und zweiten Signalisierungsdaten SIG1, SIG2 der Teilnehmerstation MS und der Station ST von den jeweiligen Teilnehmern unbemerkt signalisiert und steuern den Betrieb der Stationen MS, ST derart, dass die jeweilige Verbindung nicht automatisch aufgrund der unterbrochenen Verbindung abgebrochen wird.

Nachfolgend sendet die Vorrichtung V erneut das zweite Kontrollsignal S2 an die Funksteuerung BSC und erhält, da die Verbindungsunterbrechung nicht mehr besteht, das zweite Bestätigungssignal B2 zur Bestätigung der bestehenden Verbindung. Daraufhin initiiert die Vorrichtung V anhand der gespeicherten Signalisierungsdaten AUFB über die Funksteuerung BSC stellvertretend für die weitere Teilnehmerstation MS' einen Verbindungsaufbau mit der Station ST und richtet so die Datenübertragung ein. Auf diese Weise wird vermieden, dass die weitere Teilnehmerstation MS' wegen der detektierten Verbindungsunterbrechung die zum Aufbau einer Verbindung, d.h. zum Einrichten einer Datenverbindung benötigten Signalisierungsdaten AUFB erneut senden muss.

Weiterhin wird nach dem die Vorrichtung V die Beendigung der Unterbrechung festgestellt hat die Datenübertragung zwischen der Teilnehmerstation MS und der Station ST fortgesetzt.

Alternativ zu der Darstellung in Figur 3 kann das Ausführungsbeispiel gemäß Figur 3 auch durchgeführt werden, indem wie bereits zu Figur 2 beschrieben, die weitere Vorrichtung V' zwischen der Vorrichtung V und der Funksteuerung BSC angeordnet wird und diejenigen Funktionalitäten übernimmt, die zuvor anhand von Figur 3 von der Funksteuerung BSC übernommen wurden. In diesem Fall kann die Erfindung wiederum angewandt werden, ohne dass in einem bereits bestehenden Funkzugangsnetz die dort verwendeten Funkstationen bzw. Funksteuerungen selbst verändert werden müssen.

Auch das Ausführungsbeispiel zu Figur 3 findet seine bevorzugte Anwendung in dem Fall, in dem die weitere Teilnehmerstation MS', die Teilnehmerstation MS, die Funkstation BTS sowie die Vorrichtung V in einem Flugzeug angeordnet sind, zwischen der Vorrichtung V und der Funksteuerung BSC eine Satellitenverbindung besteht und die Funksteuerung BSC sich am Erdboden befindet. Die Station ST kann in dem Funkkommunikationssystems angeordnet sein, in dem sich die Teilnehmerstationen MS, MS' befinden, als auch in einem anderen Funkkommunikationssystem angeordnet sein. Beispielsweise kann es sich bei der Station ST auch um ein Telefon in einem Festnetz oder um einen beispielsweise mittels eines Funkmoduls an ein Funkkommunikationssystem angeschlossenen Computer handeln.

Selbstverständlich kann die in den Figuren 1 bis 3 dargestellte Signalisierung auch in der umgekehrten Richtung erfolgen, indem das erste Kontrollsignal S1 von der Funksteuerung BSC an die Vorrichtung V bzw. die weitere Vorrichtung V' gesendet wird und die Vorrichtung V das zweite Kontrollsignal S2 im Fall der Figur 1 und Figur 3 an die Funkstation BTS sendet bzw. das dritte Kontrollsignal S3 im Fall der Figur 2 von der Funkstation BTS empfängt. Dies entspricht somit den zuvor beschriebenen Ausführungsbeispielen mit in den Figuren vertauschter Position der Funkstation BTS und der Funksteuerung.

Die erfindungsgemäße Vorrichtung V ist beispielsweise in die Funksteuerung BSC integriert oder mit dieser über eine elektrische oder eine optische Leitung verbunden. Die erfindungsgemäße weitere Vorrichtung V' ist beispielsweise in die Funksteuerung BSC integriert oder mit dieser über eine elektrische oder eine optische Leitung verbunden.

Die Vorrichtung V und die weitere Vorrichtung V' werden beispielsweise ganz oder teilweise als Computerprogrammprodukt realisiert. Unter Computerprogrammprodukt wird im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, z.B. ein Computer, aber auch beispielsweise eine Speichervorrichtung oder ein Server, auf der bzw. dem zum Computerprogramm gehörende Dateien gespeichert sind, verstanden.

Bezüglich des Computerprogrammproduktes kann das Computerprogramm Programmabschnitte zur Durchführung des oben beschriebenen erfindungsgemäßen Verfahrens aufweisen.

Eine zum Einrichten einer Datenübertragung aufgebaute Verbindung wird auch als logische Verbindung bezeichnet. Durch die Erfindung kann der Abbruch einer logischen Verbindung vermieden werden, auch wenn eine physikalische Verbindung zwischen zwei Netzelementen unterbrochen oder gestört ist, über die Daten im Rahmen der logischen Verbindung übertragen werden.

## Patentansprüche

1. Verfahren zum Betrieb einer Vorrichtung (V) in einem Funkzugangsnetz eines Funkkommunikationssystem, bei dem die Vorrichtung (V)
zwischen einem ersten Netzelement (BTS) und einem zweiten Netzelement (BSC) des Funkzugangsnetzes angeordnet ist, wobei die Vorrichtung (V)
- zu einem ersten Zeitpunkt (t1) von dem ersten Netzelement (BTS) ein erstes Kontrollsignal (S1) empfängt,
- zu einem zweiten Zeitpunkt (t2) ein erstes Bestätigungssignal (B1) als Antwort auf des erste Kontrollsignal (S1) an das erste Netzelement (BTS) sendet, wobei das erste Bestätigungssignal (B1) dem ersten Netzelement (BTS) signalisiert, dass eine Verbindung zwischen erstem Netzelement (BTS) und zweitem Netzelement (BSC) besteht,
- zu einem dritten Zeitpunkt (t3) ein zweites Kontrollsignal (S2) an das zweite Netzelement (BSC) sendet, wobei das zweite Netzelement (BSC) bei Empfang des zweiten Kontrollsignals (S2) als Antwort ein zweites Bestätigungssignal (B2) an die Vorrichtung (V) sendet, um der Vorrichtung (V) das Bestehen einer Verbindung zwischen der Vorrichtung (V) und dem zweiten Netzelement (BSC) zu signalisieren,
- und das erste Bestätigungssignal (B1) auch dann sendet, wenn zwischen dem ersten Zeitpunkt (t1) und dem zweiten Zeitpunkt (t2) kein zweites Bestätigungssignal (B2) empfangen wurde.

2. Verfahren nach Anspruch 1, bei dem
das erste und das zweite Kontrollsignal (S1, S2) wiederholt empfangen und gesendet werden und jeweils unterschiedliche Wiederholraten (R1, R2) aufweisen.

3. Verfahren nach einem der vorstehenden Ansprüche, bei dem
die Wiederholrate (R2) des zweiten Kontrollsignals (S2) von der Art der Verbindung abhängt.

4. Verfahren nach einem der vorstehenden Ansprüche, bei dem
- zwischen dem ersten Netzelement (BTS) und dem zweiten Netzelement (BSC) Daten (D) einer Funkverbindung einer Teilnehmerstation (MS) des Funkkommunikationssystems übertragen werden,
- die Vorrichtung (V) eine Unterbrechung ihrer Verbindung zum zweiten Netzelement (BSC) feststellt,
- und für die Dauer der Unterbrechung gegenüber dem ersten Netzelement (BTS) einen Austausch und/oder eine Verarbeitung-von Daten (SIG1) übernimmt, die zur Aufrechterhaltung der Funkverbindung benötigt werden.

5. Verfahren nach einem der vorstehenden Ansprüche, bei dem
- die Vorrichtung (V) über das erste Netzelement (BTS) Daten (AUFB) zum Einrichten einer Datenübertragung zu einer über das zweite Netzelement (BSC) erreichbaren Teilnehmerstation (ST) des Funkkommunikationssystems empfängt,
- die Vorrichtung (V) eine Unterbrechung ihrer Verbindung zum zweiten Netzelement (BSC) feststellt,
- und die Vorrichtung (V) die für das Einrichten der Datenübertragung empfangenen Daten (AUFB) speichert und die Datenübertragung anhand der gespeicherten Daten (AUFB) einrichtet, sobald eine Verbindung zum zweiten Netzelement (BSC) besteht.

6. Verfahren nach Anspruch 4 oder 5, bei dem die Vorrichtung (V) der Teilnehmerstation (MS) und/oder einer Station (MS'), die eine Datenübertragung einzurichten wünscht, eine Information (11, 13) hinsichtlich der Unterbrechung der Verbindung sendet.

7. Verfahren nach einem der vorstehenden Ansprüche, bei dem das erste Netzelement eine Funksteuerung (BTS) und das zweite Netzelement eine Funkstation (BSC) ist.

8. Verfahren nach einem der Ansprüche 1 bis 6, bei dem das erste Netzelement eine Funkstation (BTS) und das zweite Netzelement eine Funksteuerung (BSC) ist.

9. Verfahren nach einem der vorstehenden Ansprüche, bei dem eine weitere Vorrichtung (V') zwischen der Vorrichtung (V) und dem zweiten Netzelement (BSC) angeordnet ist und statt des zweiten Netzelementes (BSC) bei Empfang des zweiten Kontrollsignals (S2) als Antwort das zweite Bestätigungssignal (B2) an die Vorrichtung (V) sendet.

10. Verfahren nach Anspruch 9, bei dem die weitere Vorrichtung (V') als Antwort auf ein vom zweiten Netzelement (BSC) empfangenes drittes Kontrollsignal (S3) dem zweiten Netzelement (BSC) mit einem dem dritten Bestätigungssignal (B3) das Bestehen einer Verbindung zum ersten Netzelement (BTS) signalisiert, ohne dass der weiteren Vorrichtung (V') eine entsprechende Information vorliegt.

11. Verfahren nach einem der Ansprüche 9 bis 10, bei dem die weitere Vorrichtung (V') oder das zweite Netzelement (BSC) einer Station (ST), mit der die Teilnehmerstation (MS) Daten austauscht, eine Information (I2) hinsichtlich der Unterbrechung der Verbindung sendet.

12. Verfahren nach einem der Ansprüche 9 bis 11, bei dem eine Übertragung von Signalen (S2, B2) zwischen der Vorrichtung (V) und dem zweiten Netzelement (BSC) oder zwischen der Vorrichtung (V) und der weiteren Vorrichtung (V') über eine Luftschnittstelle erfolgt.

13. Funkzugangsnetz mit wenigstens einer Vorrichtung (V) mit Mitteln (P) zum Durchführen eines Verfahrens gemäß einem der Ansprüche 1 bis 12.

14. Vorrichtung (V) mit Mitteln (P) zum Durchführen eines Verfahrens gemäß einem der Ansprüche 1 bis 12.

## Claims

1. Method for operating a device (V) in a radio access network of a radio communication system, in which the device (V) is arranged between a first network element (BTS) and a second network element (BSC) of the radio access network, wherein the device (V)
- receives a first control signal (S1) from the first network element (BTS) at a first point in time (t1),
- sends a first acknowledgment signal (B1) to the first network element (BTS) as response to the first control signal (S1) at a second point in time (t2), wherein the first acknowledgement signal (B1) signals to the first network element (BTS) that there is a connection between the first network element (BTS) and the second network element (BSC),
- sends a second control signal (S2) to the second network element (BSC) at a third point in time (t3), wherein the second network element (BSC), on receiving the second control signal (S2), sends a second acknowledgement signal (B2) to the device (V) as response in order to signal to the device (V) the existence of a connection between the device (V) and the second network element (BSC),
- and also sends the first acknowledgement signal (B1) when no second acknowledgement signal (B2) has been received between the first point in time (t1) and the second point in time (t2).

2. Method according to Claim 1, in which the first and the second control signal (S1, S2) are repeatedly received and sent and in each case have different repetition rates (R1, R2).

3. Method according to one of the preceding claims, in which the repetition rate (R2) of the second control signal (S2) depends on the type of connection.

4. Method according to one of the preceding claims, in which
- data (D) of a radio link of a subscriber station (MS) of the radio communication system are transmitted between the first network element (BTS) and the second network element (BSC),
- the device (V) determines an interruption of its connection to the second network element (BSC),
- and takes over an exchange and/or processing of data (SIG1) which are needed for maintaining the radio link, for the duration of the interruption with respect to the first network element (BTS).

5. Method according to one of the preceding claims, in which
- the device (V) receives data (AUFB) for providing a data transmission to a subscriber station (ST), which can be reached via the second network element (BSC), of the radio communication system via the first network element (BTS),
- the device (V) determines an interruption of its connection to the second network element (BSC),
- and the device (V) stores the data (AUFB) received for providing the data transmission and provides the data transmission by means of the stored data (AUFB) as soon as there is a connection to the second network element (BSC).

6. Method according to Claim 4 or 5, in which the device (V) sends to the subscriber station (MS) and/or a station (MS') which wishes to provide a data transmission, an information item (Il, 13) with regard to the interruption of the connection.

7. Method according to one of the preceding claims, in which the first network element is a radio controller (BTS) and the second network element is a radio station (BSC).

8. Method according to one of Claims 1 to 6, in which the first network element is a radio station (BTS) and the second network element is a radio controller (BSC).

9. Method according to one of the preceding claims, in which a further device (V') is arranged between the device (V) and the second network element (BSC) and, instead of the second network element (BSC), sends the second acknowledgement signal (B2) to the device (V) as response when receiving the second control signal (S2).

10. Method according to Claim 9, in which the further device (V') signals to the second network element (BSC), as a response to a third control signal (S3) received from the second network element (BSC), the existence of a connection to the first network element (BTS) with the third acknowledgement signal (B3) without the corresponding information being available to the further device (V').

11. Method according to one of Claims 9 to 10, in which the further device (V') or the second network element (BSC) sends to a station (ST) with which the subscriber station (MS) exchanges data, an information item (I2) with regard to the interruption of the connection.

12. Method according to one of Claims 9 to 11, in which signals (S2, B2) are transmitted between the device (V) and the second network element (BSC) or between the device (V) and the further device (V') via an air interface.

13. Radio access network with at least one device (V) with means (P) for carrying out a method according to one of Claims 1 to 12.

14. Device (V) with means (P) for carrying out a method according to one of Claims 1 to 12.

## Revendications

1. Procédé d'exploitation d'un dispositif (V) dans un réseau d'accès radio d'un système de radiocommunication dans lequel le dispositif (V) est situé entre un premier élément de réseau (BTS) et un deuxième élément de réseau (BSC) du réseau d'accès radio, le dispositif (V)
- recevant un premier signal de contrôle (S1) du premier élément de réseau (BTS) à un premier instant (t1),
- envoyant au premier élément de réseau (BTS), en réponse au premier signal de contrôle (S1), un premier signal de confirmation (B1) à un deuxième instant (t2), le premier signal de confirmation (B1) signalant au premier élément de réseau (BTS) l'existence d'une liaison entre un premier élément de réseau (BTS) et un deuxième élément de réseau (BSC),
- envoyant un deuxième signal de contrôle (S2) au deuxième élément de réseau (BSC) à un troisième instant (t3), le deuxième élément de réseau (BSC), à la réception du deuxième signal de contrôle (S2), envoyant en réponse un deuxième signal de confirmation (B2) au dispositif (V) pour signaler au dispositif (V) l'existence d'une liaison entre le dispositif (V) et le deuxième élément de réseau (BSC), et
- émettant le premier signal de confirmation (B1) même si aucun deuxième signal de confirmation (B2) n'a été reçu entre le premier instant (t1) et le deuxième instant (t2).

2. Procédé selon la revendication 1, dans lequel le premier et le deuxième signal de contrôle (S1, S2) sont reçus et émis de manière répétée et présentent respectivement des taux de répétition (R1, R2) différents.

3. Procédé selon l'une des revendications précédentes, dans lequel le taux de répétition (R2) du deuxième signal de contrôle (S2) dépend du type de la liaison.

4. Procédé selon l'une des revendications précédentes, dans lequel
- des données (D) d'une liaison radio d'une station d'usager (MS) du système de radiocommunication sont transmises entre le premier élément de réseau (BTS) et le deuxième élément de réseau (BSC),
- le dispositif (V) constate une interruption de sa liaison avec le deuxième élément de réseau (BSC) et,
- pour la durée de l'interruption, prend en charge, vis-à-vis du premier élément de réseau (BTS), un échange et/ou un traitement de données (SIG1) requises pour le maintien de la liaison radio.

5. Procédé selon l'une des revendications précédentes, dans lequel
- le dispositif (V) reçoit, via le premier élément de réseau (BTS), des données (AUFB) pour établir une transmission de données vers une station d'usager (ST) du système de radiocommunication, laquelle est joignable via le deuxième élément de réseau (BSC),
- le dispositif (V) constate une interruption de sa liaison avec le deuxième élément de réseau (BSC) et
- le dispositif (V) stocke les données (AUFB) reçues aux fins de l'établissement de la transmission de données et établit la transmission de données à l'aide des données stockées (AUFB) dès qu'il existe une liaison avec le deuxième élément de réseau (BSC).

6. Procédé selon la revendication 4 ou 5, dans lequel le dispositif (V) envoie une information (I1, 13), relative à l'interruption de la liaison, à la station d'usager (MS) et/ou à une station (MS') qui demande l'établissement d'une transmission de données.

7. Procédé selon l'une des revendications précédentes, dans lequel le premier élément de réseau est une radiocommande (BTS) et le deuxième élément de réseau est une station radio (BSC).

8. Procédé selon l'une des revendications 1 à 6, dans lequel le premier élément de réseau est une station radio (BTS) et le deuxième élément de réseau est une radiocommande (BSC) .

9. Procédé selon l'une des revendications précédentes, dans lequel un autre dispositif (V') est situé entre le dispositif (V) et le deuxième élément de réseau (BSC) et, à la réception du deuxième signal de contrôle (S2), envoie en réponse, à la place du deuxième élément de réseau (BSC), le deuxième signal de confirmation (B2) au dispositif (V).

10. Procédé selon la revendication 9, dans lequel l'autre dispositif (V'), en réponse à un troisième signal de contrôle (S3) reçu du deuxième élément de réseau (BSC), signale au deuxième élément de réseau (BSC), par un le troisième signal de confirmation (B3), l'existence d'une liaison avec le premier élément de réseau (BTS) sans que l'autre dispositif (V') dispose d'une information correspondante.

11. Procédé selon l'une des revendications 9 à 10, dans lequel l'autre dispositif (V') ou le deuxième élément de réseau (BSC) envoient une information (I2), relative à l'interruption de la liaison, à une station (ST) avec laquelle la station d'usager (MS) échange des données.

12. Procédé selon l'une des revendications 9 à 11, dans lequel une transmission de signaux (S2, B2) entre le dispositif (V) et le deuxième élément de réseau (BSC) ou entre le dispositif (V) et l'autre dispositif (V') a lieu via une interface aérienne.

13. Réseau d'accès radio comportant au moins un dispositif (V) avec des moyens (P) pour exécuter un procédé selon l'une des revendications 1 à 12.

14. Dispositif (V) comportant des moyens (P) pour exécuter un procédé selon l'une des revendications 1 à 12.
